Europäisches Patentamt

(19) European Patent Office

Office européen des brevets

(11) Numéro de publication: **0 014 665 B1**

(12) **FASCICULE DE BREVET EUROPEEN**

(45) Date de publication du fascicule du brevet:
06.04.83

(21) Numéro de dépôt: **80400202.0**

(22) Date de dépôt: **08.02.80**

(51) Int. Cl.³: **H 04 N 9/539**

(54) Procédé et système d'incrustation d'images en télévision en couleurs.

(30) Priorité: **12.02.79 FR 7903521**

(43) Date de publication de la demande:
**20.08.80 Bulletin 80/17**

(45) Mention de la délivrance du brevet:
**06.04.83 Bulletin 83/14**

(84) Etats contractants désignés:
**BE CH DE GB IT NL SE**

(56) Documents cités:
**DE-A-2 612 042**
**DE-A-2 749 154**
**FR-A-2 128 156**
**FR-A-2 142 820**
**FR-A-2 345 030**
**NL-A-7 710 959**
**US-A-3 778 542**
**US-A-4 007 487**

(73) Titulaire: **Etablissement Public Telediffusion de France,
10, rue d'Oradour-sur-Glane, F-75732 Paris
Cedex 15 (FR)**

(72) Inventeur: **Macheboeuf, Guy, 5, Rue A. Tremblay,
F-94400 Vitry-sur-Seine (FR)**

(74) Mandataire: **Martinet, René et al, Cabinet
Martinet 62, rue des Mathurins, F-75008 Paris (FR)**

Procédé et système d'incrustation d'images en télévision en couleurs

La présente invention concerne un procédé et un système d'incrustation d'images en télévision en couleurs.

Plus particulièrement, elle a trait à un procédé d'incrustation d'une image d'avant-scène dans une image d'arrière-scène en télévision en couleurs, selon lequel une première source vidéo fournit l'image d'avant-scène devant un fond ayant, relativement à un système à trois axes de coordonnée colorimétrique primaire, un domaine colorimétrique à l'intérieur du domaine colorimétrique de l'image d'avant-scène, et une seconde source vidéo fournit une image d'arrière-scène, et selon lequel les composantes primaires du signal vidéo de l'image composite d'avant-scène et de fond sont transmises à des moyens pour produire un signal de commande ayant un premier niveau lorsque la première source vidéo délivre l'image d'avant-scène afin de commander la transmission de l'image d'avant-scène et ayant un second niveau lorsque la première source vidéo délivre l'image de fond afin de commander la transmission de l'image d'arrière-scène. Le système d'incrustation mettant en œuvre ce procédé comprend des moyens ayant leurs entrées recevant les composantes primaires séparées de l'image composite d'avant-scène et de fond pour produire des signaux de commande de gain primaires ayant chacun ledit second niveau lorsque l'amplitude de la composante primaire respective du signal vidéo de l'image composite est comprise entre deux premières tensions respectives de référence délimitant le domaine trichromatique de l'image de fond, et ayant ledit premier niveau lorsque l'amplitude de la composante primaire respective du signal vidéo de l'image composite n'est pas comprise au moins entre lesdites deux premières tensions respectives de référence, des moyens pour multiplier lesdits signaux de commande primaires en ledit signal de commande, des moyens recevant les signaux vidéos de l'image composite et de l'image d'arrière-scène pour sélectionner sous la commande du signal de commande la transmission des signaux vidéos de l'image d'avant-scène et de l'image d'arrière-scène et des moyens pour mélanger les signaux vidéos sélectionnés en un signal vidéo résultant transmettant l'image d'avant-scène incrustée dans l'image d'arrière-scène.

De tels procédé et système d'incrustation d'images en télévision en couleurs sont divulgués dans le FR-B-2 142 820 (ou dans les brevets correspondants GB-A-1 388 288 et allemand DE-C-2 225 993.4). Selon ce brevet, les premières tensions de référence délimitent également le domaine colorimétrique de l'image d'avant-scène qui contient le domaine colorimétrique de l'image de fond. Le signal de commande d'incrustation qui commande la suppression du fond dans l'image d'avant-scène et la suppression de la zone correspondant à l'image d'avant-scène à incruster dans l'image d'arrière-scène, est un signal logique à deux niveaux qui est obtenu par des moyens de multiplication logiques. Un premier niveau, bas par exemple, est produit lorsqu'un point de l'image d'avant-scène est détecté, et un second niveau, ou niveau haut, est produit lorsqu'un point de l'image de fond est détecté. Les deux niveaux sont séparés par des fronts descendants et ascendants abrupts. Par suite, la bordure entre l'image d'avant-scène et l'image d'arrière-scène substituée à l'image de fond dans l'image incrustée résultante est très nette, ce qui ne permet pas d'obtenir des effets de transparence. En effet, lorsque l'image d'avant-scène comporte un objet transparent, tel qu'un verre ou une bouteille, filmé par la première source, l'image composite présente le fond à travers la transparence de l'objet et n'appartient plus, dans une large mesure, au domaine colorimétrique du fond. Lors de l'incrustation, au lieu de voir l'image d'arrière-scène, tel qu'un décor, à travers l'objet transparent, c'est le fond qui est vu à travers l'objet. Ce même phénomène peut se renouveler lorsque l'image d'avant-scène est un personnage dont, par exemple, les cheveux sont échevelés.

Par ailleurs, on connaît des systèmes d'incrustation d'image en télévision en couleurs, également appelés systèmes de combinaison d'une image d'avant-scène et d'une image d'arrière-scène en une image composite, pour lesquels le fond de l'image d'avant-scène est unicolore et, plus précisément, est d'une couleur pure appartenant à l'une des composantes primaires, généralement la composante bleue, d'où la désignation de procédé avec «écran ou fond unicolore bleu». A cet égard, on pourra se reporter aux brevets US-A-3 778 542, US-A-3 595 987 (demandes pendantes FR-A-2 128 156 et DE-A-2 107 524) et US-A-4 007 487, et à la DE-A-2 749 154-9.

Selon ces systèmes à fond unicolore, c'est-à-dire pour lesquels le fond est limité par un segment ouvert suivant l'un des axes de coordonnées du repère trichromatique R, V, B, à partir d'un seuil inférieur déterminé, le signal commandant l'incrustation est obtenu par la sélection dudit seuil déterminé, lequel varie en fonction de l'amplitude de la composante primaire sélectionnée de l'image d'avant-scène, par exemple la primaire bleue, qui est pondérée par une relation linéaire de l'une ou des deux autres composantes primaires (rouge et verte) de l'image d'avant-scène. Cette pondération a pour inconvénient qu'elle doit être réglée manuellement pour chaque séquence d'image d'avant-scène en dépendance de la tonalité colorimétrique dominante de celle-ci. Cependant, elle permet, dans certains cas, de visualiser l'image d'arrière-scène à travers un objet transparent de l'image d'avant-scène, mais avec un certain flou qui peut être réglable manuellement. Par ailleurs, relativement à la couleur sélectionnée du fond, l'image d'avant-scène ne doit pas posséder des points images ayant une composante primaire correspondante dont l'amplitude est supérieure à celle unique du fond. En d'autres termes, le domaine trichromatique de l'image d'avant-scène (tel qu'un personnage) est limité par un plan qui est parallèle au plan des coordonnées des autres composantes primaires (rouge et verte) et qui coupe l'axe de coordonnée de la composante primaire sélectionnée (bleue) en un point ayant pour coordonnée ledit seuil inférieur de la composante primaire du fond. Le domaine contenant l'origine du repère trichromatique et limité par ledit plan contient celui de l'image d'avant-scène.

La présente invention a pour but de s'affranchir des inconvénients de transparence précités et de distinguer le domaine de transition trichromatique entre les domaines trichromatiques de l'image d'avant-scène et de l'image de fond dans l'image composite afin qu'une partie de l'image d'avant-scène et une partie de l'image d'arrière-scène soient transmises simultanément dans un rapport variable lorsque le domaine de transition est détecté.

A cette fin, le procédé d'incrustation d'une image d'avant-scène dans une image d'arrière-scène en télévision en couleurs est tel que caractérisé dans la revendication 1. Un système d'incrustation d'une image d'avant-scène dans une image d'arrière-scène en télévision en couleurs pour la mise en œuvre de ce procédé est tel que caractérisé dans la revendication 5.

Lorsque le domaine de transition est détecté, suivant les trois composantes primaires, séparément en dépendance des composantes primaires du signal vidéo de l'image composite, l'image composite est atténuée simultanément à l'amplification de l'image d'arrière-scène lorsque la bordure du domaine de transition contiguë au domaine colorimétrique de l'image d'avant-scène est détectée. Ainsi, la partie correspondant au domaine de transition dans l'image incrustée résultante est composée d'un mélange flou des images d'avant-scène et d'arrière-scène.

D'autres avantages de la présente invention apparaîtront plus clairement à la lecture de la description qui suit d'exemples préférés de réalisation et à l'examen des dessins annexés correspondants, dans lesquels:

la fig. 1 est un bloc-diagramme du système d'incrustation selon une première réalisation, dans lequel le circuit de commande de gain est détaillé;

la fig. 2 montre, dans le système trichromatique R, V, B, les limites des domaines colorimétriques relatives aux images d'avant-scène et de fond, définissant le domaine trichromatique de transition;

les figs. 3A à 3E représentent différents signaux en vue d'élaborer un signal de commande de gain primaire à partir d'une composante primaire du signal vidéo de l'image composite d'avant-scène et de fond, et

la fig. 4 représente, sous la forme d'un bloc-diagramme, une seconde réalisation du système d'incrustation dans lequel le circuit de commande de gain est une partie de celui de la fig. 1.

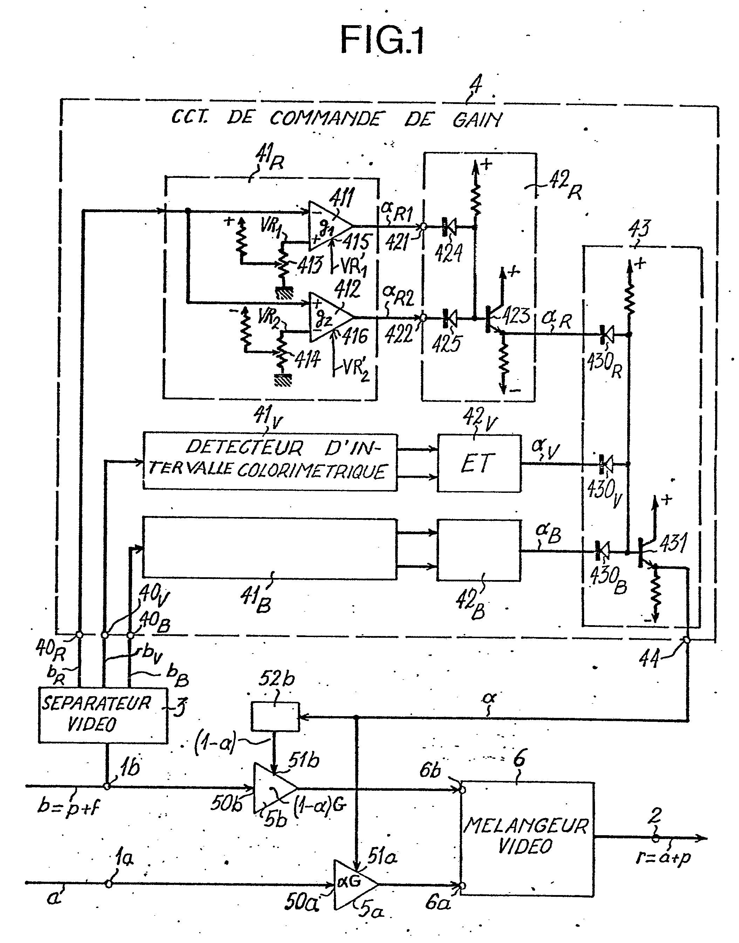

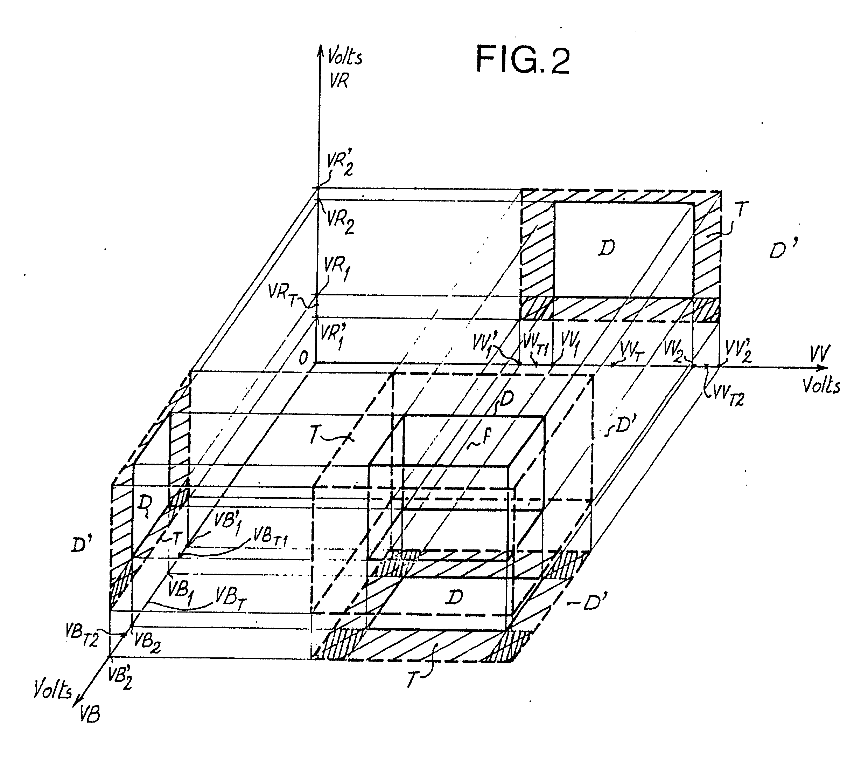

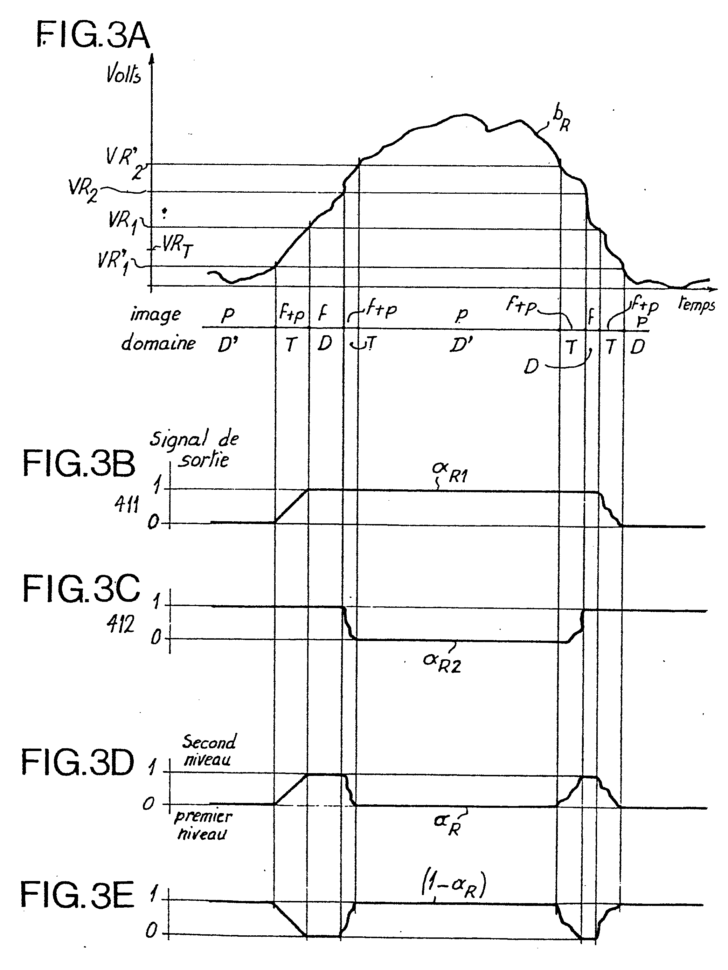

Le système d'incrustation d'images en télévision en couleurs tel que représenté à la fig. 1 reçoit à ses entrées 1b et 1a deux signaux vidéo composites qui sont transmis respectivement à partir d'une première source vidéo fournissant le signal composite d'une image de télévision en couleurs composite b et à partir d'une seconde source vidéo fournissant le signal composite d'une image de télévision en couleurs d'arrière-scène a. L'image b est par exemple celle représentant un personnage p évoluant devant un fond en couleurs f, et l'image a est par exemple un décor en couleurs à substituer au fond f. Le domaine colorimétrique de l'image p est sensiblement le complément du domaine colorimétrique de l'image f dans le système colorimétrique total. Les première et seconde sources vidéo sont synchronisées et sont généralement des caméras couleurs électroniques mais peuvent être également d'autres sources vidéo qui son utilisées couramment dans la technique du trucage vidéo, telles que des magnétoscopes, des transmetteurs de diapositives, etc.

On a représenté à la fig. 2 le système cartésien trichromatique classique, relatif aux trois coordonnées monochromatiques des composantes primaires rouge R, verte V et bleue B d'un signal vidéo en couleurs. Le domaine colorimétrique D du fond f est à l'intérieur d'un parallélépipède délimité par trois paires de plans parallèles définis par des premières tensions de référence et ayant pour équations $VR = VR_1$ et $VR = VR_2$, $VV = VV_1$ et $VV = VV_2$, $VB = VB_1$ et $VB = VB_2$. Le domaine colorimétrique D' de l'image p est à l'extérieur d'un parallélépipède délimité par trois paires de plans parallèles définis par des secondes tensions de référence et ayant pour équations $VR = VR_1'$ et $VR = VR_2'$, $VV = VV_1'$ et $VV = VV_2'$, $VB = VB_1'$ et $VB = VB_2'$. Le domaine D est contenu dans le domaine D'. Les domaines D et D' sont séparés par un domaine dit de transition T dont les parties non recouvertes par le domaine D et projetées sur les plans de coordonnées $VR = O$, $VV = O$ et $VB = O$ sont hachurées dans la fig. 2. Ce domaine de transition T correspond au mélange «flou» de couleurs des bords communs des images f et p ou, plus généralement, à des parties d'image «communes ou confondues» des images p et f. De telles parties d'images sont par exemple la chevelure ébroussaillée d'un personnage ou un objet transparent, tel qu'un verre ou une bouteille, à travers lesquels apparaît le fond f. Dans le système d'incrustation en télévision en couleurs du FR-B-2 142 820 selon lequel la séparation des images p et f était abrupte au niveau des plans délimitant le domaine parallélépipédique D, l'image incrustée en couleurs résultante présentait lesdites parties communes avec ledit fond f. Ceci produisait un effet de bordure gênant et également une reproduction non fidèle du décor. Au contraire, conformément à l'objet de l'invention, le système de la fig. 1 permet de supprimer ce défaut car, dans l'image incrustée en couleurs résultante r transmise par la sortie 2 du système, un verre de l'image p par exemple fait apparaître à travers celui-ci la partie du décors correspondante.

On notera que les deux intervalles de tensions de référence du domaine de transition T relativement à chaque coordonnée colorimétrique R, V, B, respectivement $VR_1$–$VR_1'$ et $VR_2'$–$VR_2$, $VV_1$–$VV_1'$ et $VV_2'$–$VV_2$, $VB_1$–$VB_1'$ et $VB_2'$–$VB_2$ peuvent être différents et peuvent être sélectionnés indépendamment par l'opérateur, l'un par rapport à l'autre et chacun par rapport aux quatre autres des deux autres composantes primaires, comme on le verra dans la suite.

Toujours en référence à la fig. 2 et relativement aux systèmes d'incrustation antérieurs dits à fond bleu, on notera que pour ces systèmes le domaine du fond est un point de coordonnées VB, O, O ou un segment ouvert colinéaire à l'axe de coordonnée VB, représentant les valeurs VB supérieures à $VB_1$. Le domaine colorimétrique de l'image d'avant-scène, tel qu'un personnage, est défini par tous les points ayant leur composante primaire sélectionnée bleue telle que VB < $VB_1$. Comme déjà dit, $VB_1$ dépend d'une relation linéaire des deux autres composantes telles que $VB_1 = k_R VR + k_V VV$, où $k_R$ et $k_V$ sont des paramètres réglables manuellement.

Selon l'exemple de réalisation montré à la fig. 1, on a supposé que les entrées 1a et 1b recevaient directement les signaux vidéo composites de l'image d'arrière-scène a et de l'image composite d'avant-scène et de fond b = p + f. Dans ce cas, le signal vidéo b est transmis à l'entrée d'un séparateur vidéo 3 qui filtre les trois composantes primaires $b_R$, $b_V$ et $b_B$ de l'image b pour les transmettre aux trois entrées $40_R$, $40_V$, $40_B$ d'un circuit de commande de gain 4. Cependant, selon d'autres réalisations dépendant du procédé de télévision en couleurs adopté, les images b et a peuvent être transmises à partir des première et seconde sources directement sous la forme de composantes primaires $b_R$, $b_V$, $b_B$ et $a_R$, $a_V$, $a_B$ ou d'une autre combinaison de celles-ci. Dans ce dernier cas, les composantes primaires sont transmises directement aux entrées $40_R$, $40_V$, $40_B$ et des mélangeurs vidéo convenables restituent aux entrées 1a et 1b· les signaux vidéo composites a et b.

Les signaux vidéo composites a et b sont transmis respectivement aux entrées vidéo 50a, 50b d'amplificateurs à gain variable 5a, 5b. Les amplificateurs 5a et 5b ont un gain maximal G et présentent une variation de gain respective $\alpha$G et (1–$\alpha$) G corrélé au signal de commande $\alpha$ transmis par la sortie 44 du circuit 4. Ce signal $\alpha$ est un signal de tension analogique variant entre un premier niveau dit bas égal à zéro et un second niveau dit haut égal à l'unité. Ce signal $\alpha$ commande l'incrustation de la partie du signal vidéo b représentant l'image d'avant-scène p dans le signal vidéo a en supprimant les effets de bord.

Ce signal $\alpha$ est issu du produit analogique de signaux de commande de gain primaires $\alpha_R$, $\alpha_V$, $\alpha_B$, tels que celui $\alpha_R$ représenté à la fig. 3D qui est relatif uniquement à la détection des intervalles monochromatiques primaires rouges associés aux domaines D, D' et T et qui ne dépend donc pas des deux autres composantes primaires (bleue et verte) de l'image composite d'avant-scène et de fond. Le premier niveau dit bas du signal $\alpha$ correspond à la détection de points de l'image composite b appartenant au domaine colorimétrique D' de l'image p et le second niveau dit haut du signal $\alpha$ correspond à la détection de points de l'image b appartenant au domaine colorimétrique D de l'image f. Un niveau de tension intermédiaire du signal $\alpha$ compris entre le premier niveau dit bas et le second niveau dit haut correspond à la détection de points de l'image b appartenant au domaine colorimétrique de transition T commun aux images p et f. Le niveau de tension intermédiaire représentatif d'un point image du domaine T est égal au produit de un, deux ou trois rapports selon qu'une, deux ou trois coordonnées primaires du point sont comprises respectivement dans un intervalle de tensions de référence définissant deux plans parallèles et voisins des domaines parallélépipédiques D et D'. Chaque rapport est égal au rapport de la distance du point à la face parallèle associée du domaine D ou du domaine D' et de la distance entre les deux faces parallèles associées des domaines D et D' respectivement pour chaque coordonnée, ou peut être en général égal à une relation quasi-linéaire de ce rapport. Par exemple, pour un point du domaine T qui a une coordonnée rouge $VR_T$ et qui est comprise entre les plans définis par l'intervalle de tensions VR = $VR_1'$ et VR = $VR_1$, comme montré aux figs. 2 et 3A, ledit produit de rapports est le produit:

a) d'un premier rapport égal à $(VR_T–VR_1')/VR_1–VR_1')$, si le point considéré a des secondes coordonnées verte et bleue $VV_T$, $VB_T$, comprises dans le domaine D entre les paires de plans respectives VV = $VV_1$, VV = $VV_2$ et VB = $VB_1$, VB = $VB_2$;

b) dudit premier rapport et d'un second rapport égal à $(VV_{T1}–VV_1')/(VV_1–VV_1')$ ou à $(VV_{T2}–VV_2)/VV_2'–VV_2)$, si le point considéré a une seconde coordonnée verte $VV_{T1}$ ou $VV_{T2}$ comprise entre les plans VV = $VV_1'$ et VV = $VV_1$ ou les plans VV = $VV_2$ et VV = $VV_2'$ et a une troisième coordonnée bleue $VB_T$ comprise entre les plans VB = $VB_1$ et VB = $VB_2$;

c) dudit premier rapport et d'un autre second rapport égal à $(VB_{T1}–VB_1')/(VB_1–VB_1')$ ou à $(VB_{T2}–VB_2)/(VB_2'–VB_2)$, si le point considéré a une troisième coordonnée bleue $VB_{T1}$ ou $VB_{T2}$ comprise entre les plans VB = $VB_1'$ et VB = $VB_1$ ou entre les plans VB = $VB_2$ et $V_B = VB_2'$ et a une seconde coordonnée verte $VV_T$ comprise entre les plans VV = $VV_1$ et VV = $VV_2$;

d) dudit premier rapport, de l'un desdits seconds rapports définis à l'alinéa b) ou c) et d'un troisième rapport égal à l'un desdits seconds rapports définis à l'alinéa c) ou b), si le point considéré appartient aux quatre sous-domaines parallélépipédiques du domaine T entre les paires d'arêtes des domaines D et D', tels que montrés par les hachures croisées sur la fig. 2.

Par contre, on notera que, si l'une des coordonnées d'un point du domaine colorimétrique est plus grande que $VR_2'$, $VV_2'$ et $VB_2'$ ou plus petite que $VR_1'$, $VV_1'$ et $VB_1'$ respectivement, le point

appartient au domaine D′ de l'image d'avant-scène p et, par suite, correspond au niveau bas du signal $\alpha$.

Comme montré à la fig. 1, le signal $\alpha$ est transmis à partir de la sortie 44 directement à l'entrée de commande de gain 51a de l'amplificateur 5a et à l'entrée d'un circuit inverseur analogique 52b qui restitue le signal $(1-\alpha)$ à l'entrée de commande de gain 51b de l'amplificateur 5b. Les sorties des amplificateurs 5a et 5b sont reliées aux deux entrées 6a et 6b d'un mélangeur vidéo classique 6 qui transmet à sa sortie 2 le signal vidéo de l'image incrustée résultante r. Ce signal r restitue, selon la relation : signal $r = [\alpha(\text{signal } a) + (1-\alpha)(\text{signal } b)]G$ :

a) la zone de l'image d'arrière-scène a correspondant à celle du domaine D de l'image de fond f, lorsque le signal $\alpha$ est au second niveau dit haut $(\alpha = 1)$ ;

b) la zone de l'image b correspondant à celle du domaine D′ de l'image d'avant-scène p, lorsque le signal $\alpha$ est au premier niveau dit bas $(\alpha = 0)$ ;

c) la zone de l'image commune aux images p et a appartenant au domaine colorimétrique de transition T lorsque le signal $\alpha$ a un niveau intermédiaire compris entre les premier et second niveaux «0» et «1» avec une contribution prépondérante de l'image d'avant-scène p lorsque le niveau du signal $\alpha$ est voisin du premier niveau «0» et une contribution prépondérante de l'image d'arrière-scène a lorsque le niveau du signal $\alpha$ est voisin du second niveau «1».

En se référant à nouveau aux figs. 1 et 3, on décrit le circuit de commande de gain produisant le signal de commande de gain $\alpha$. A chaque entrée $40_R$, $40_V$, $40_B$ transmettant une composante primaire $b_R$, $b_V$, $b_B$ du signal vidéo b sont reliés en série un détecteur $41_R$, $41_V$, $41_B$ qui détecte des intervalles colorimétriques primaires appartenant aux domaines D, D′, et T un circuit de multiplication analogique $42_R$, $42_V$, $42_B$ respectivement. Seuls, le détecteur $41_R$ et le circuit de multiplication $42_B$ sont détaillés sur la fig. 1, les autres étant respectivement identiques, aux réglages près des tensions de référence limitant les intervalles colorimétriques.

Le détecteur $41_R$ comprend deux amplificateurs opérationnels à gain variable 411 et 412 ayant respectivement leurs entrées inverse $(-)$ et directe $(+)$ reliées à la borne $40_R$. Chaque amplificateur 411, 412 est un amplificateur non-linéaire, c'est-à-dire ayant un gain variant comme une fonction quasi-linéaire de la tension appliquée à son entrée dans une fenêtre d'admission déterminée par son gain et ayant une impédance de sortie faible. Des bornes de commande de gain 415, 416 des amplificateurs 411, 412 reçoivent une tension proportionnelle à $VR_1′$, $VR_2′$ respectivement. L'autre entrée, respectivement directe $(+)$ et inverse $(-)$, d'un amplificateur 411, 412 reçoit un signal de tension $VR_1$, $VR_2$, réglable au moyen d'un potentiomètre 413, 414 et correspondant à l'une des limites de tension de référence de la primaire rouge du domaine D du fond f. Le réglage des potentiomètres 413 et 414 peut être connu pour une différence $VR_2-VR_1$ constante prédéterminée. L'amplificateur 411 amplifie tout signal d'amplitude $b_R$ compris entre les premières limites $VR_1$ et $VR_1′$ du domaine de transition T avec un gain $g_1$ proportionnel à $k_1 (b_R-VR_1′)/(VR_1-VR_1′)$, où $k_1$ est une constante dépendant du réglage du gain de l'amplificateur 411 et fonction de l'invervalle de tensions $(VR_1-VR_1′)$. De même, l'amplificateur 412 amplifie tout signal d'amplitude $b_R$ comprise entre les secondes limites $VR_2$ et $VR_2′$ du domaine de transition T avec un gain $g_2$ proportionnel à $k_2 (b_R-VR_2′)/(VR_2-VR_2′)$ où $k_2$ est une constante dépendant du réglage du gain de l'amplificateur 412 et fonction de l'intervalle de tensions $(VR_2-VR_2′)$. Ainsi, lorsque le signal de la composante primaire rouge $b_R$ représenté à la fig. 3A appartient au domaine colorimétrique D′ tel que $b_R < VR_1′$, les amplificateurs 411 et 412 sont respectivement «bloqué» $(g_1 = 0)$ et «saturé» $(g_2 = 1)$ et transmettent aux entrées 421, 422 du circuit de multiplication analogique $42_R$ deux signaux $\alpha_{R1}$, $\alpha_{R2}$ aux niveaux bas et haut, respectivement. Inversement, lorsque $b_R$ est tel que $b_R > VR_2′$, les amplificateurs 411 et 412 sont respectivement «saturé» $(g_1 = 1)$ et «bloqué» $(g_2 = 0)$ et les signaux $\alpha_{R1}$ et $\alpha_{R2}$ sont aux niveaux haut et bas, respectivement. Par suite, lorsque $b_R$ a un niveau appartenant au domaine de l'image de fond f, tel que $VR_1 \leq b_R \leq VR_2$, les signaux $\alpha_{R1}$ et $\alpha_{R2}$ sont tous deux au niveau haut, et lorsque $b_R$ est à un niveau intermédiaire appartenant au domaine de transition T, les signaux $\alpha_{R1}$ et $\alpha_{R2}$ ont une variation comprise entre 0 et 1 analogue à l'amplitude de $b_R$ respectivement lorsque $VR_1′ \leq b_R \leq VR_1$ et lorsque $VR_2 \leq b_R \leq VR_2′$. Les signaux $\alpha_{R1}$ et $\alpha_{R2}$ transmis par les sorties des amplificateurs 411 et 412 sont montrés aux figs. 3B et 3C en correspondance avec le signal de composante primaire rouge $b_R$ montré à la fig. 3A.

La combinaison par multiplication analogique des signaux $\alpha_{R1}$ et $\alpha_{R2}$ en un signal de commande de gain primaire $\alpha_R$ est réalisée dans un circuit $42_R$ tel qu'une porte ET analogique classique qui comprend côté sortie un transistor 423 et côté entrée deux diodes 424, 425, comme montré à la fig. 1, ou deux transistors montés en diodes. Les deux autres circuits de multiplication analogiques $42_V$ et $42_B$ restituent des signaux de commande de gain primaires $\alpha_V$ et $\alpha_B$ qui délimitent, de manière analogue au signal $\alpha_R$ montré à la fig. 3D, les intervalles monochromatiques vert et bleu associés aux domaines D, D′ et T. La multiplication analogique des trois signaux $\alpha_R$, $\alpha_V$, $\alpha_B$ est effectuée par un circuit analogique 43 tel qu'une porte ET analogique classique. Ce circuit 43 comprend, côté de ses trois entrées, trois diodes $430_R$, $430_V$, $430_B$, qui reçoivent respectivement les signaux $\alpha_R$, $\alpha_V$, $\alpha_B$, comme montré à la fig. 1, ou trois transistors montés en diodes et, côté de sa sortie 44, un transistor 431. La sortie 44 du circuit 43 transmet le signal de commande de gain global $\alpha$ vers les amplificateurs à gain variable 5a et 5b.

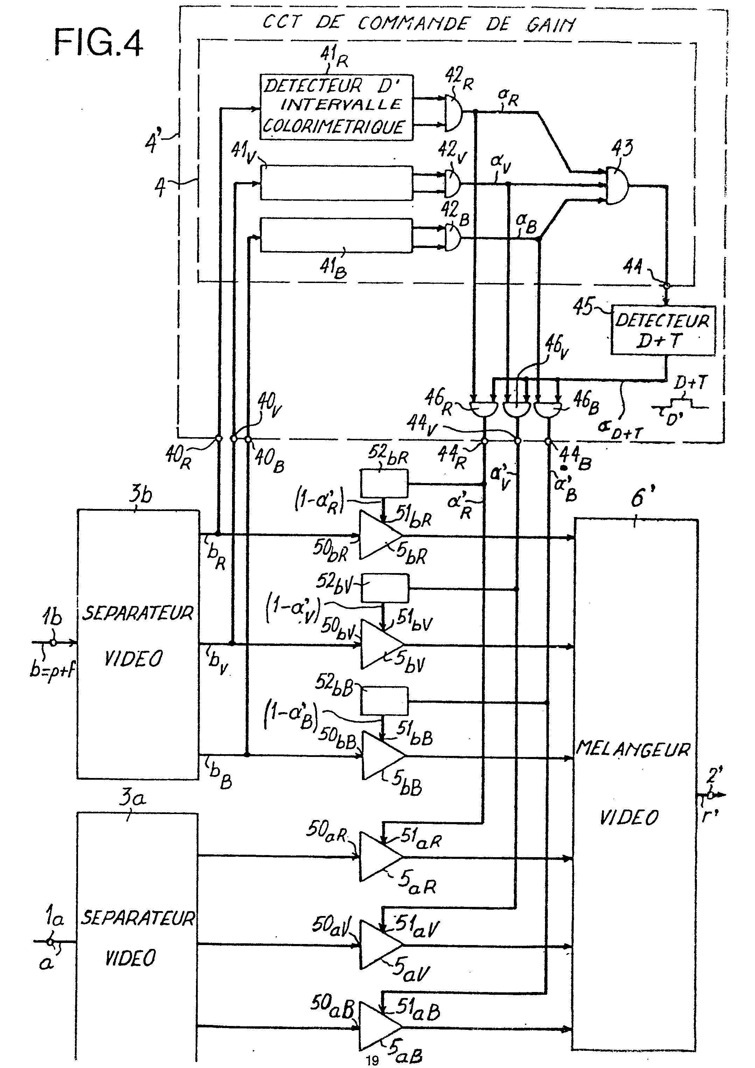

Selon une seconde variante montrée à la fig. 4, le système d'incrustation d'images de télévision en couleurs comprend, si nécessaire, le séparateur vidéo 3b et un séparateur vidéo 3a recevant le signal vidéo composite a, via l'entrée 1a. Les séparateurs vidéo 3a et 3b filtrent et séparent les composantes primaires $a_R$, $a_V$, $a_B$ et $b_R$, $b_V$, $b_B$ des signaux vidéo a et b reçus. Les trois sorties du séparateur vidéo 3b transmettent respectivement les composantes primaires séparées $b_R$, $b_V$, $b_B$ aux trois entrées vidéo $50_{bR}$, $50_{bV}$, $50_{bB}$ de trois premiers amplificateurs à gain variable $5_{bR}$, $5_{bV}$, $5_{bB}$. Les trois sorties du séparateur vidéo 3a transmettent respectivement les composantes primaires séparées $a_R$, $a_V$, $a_B$ aux trois entrées vidéo $50_{aR}$, $50_{aV}$, $50_{aB}$ de trois seconds amplificateurs à gain variable $5_{aR}$, $5_{aV}$, $5_{aB}$. Ces premiers et seconds amplificateurs sont analogues aux amplificateurs 5a et 5b de la fig. 1 et ont un gain maximal égal à G. Les entrées $51_{bR}$, $51_{bV}$, $51_{bB}$ des amplificateurs $5_{bR}$, $5_{bV}$, $5_{bB}$ reçoivent chacune un second signal de commande de gain primaire inversé, respectivement $(1-\alpha_R')$, $(1-\alpha_V')$, $(1-\alpha_B')$, par un circuit inverseur analogique $52_{bR}$, $52_{bV}$, $52_{bB}$. Les entrées de chaque couple d'un circuit inverseur associé à la voie du signal b et d'un amplificateur à gain variable associé à la voie du signal a, relativement à une même composante primaire, reçoivent ledit second signal de commande de gain primaire $\alpha_R'$, $\alpha_V'$, $\alpha_B'$ qui est transmis par la sortie respective parmi trois, $44_R$, $44_V$, $44_B$ d'un circuit de commande de gain 4'. Ce circuit 4' comporte le circuit de commande de gain 4 de la fig. 1 et, en plus, un détecteur 45 du domaine colorimétrique D + T et un jeu de trois circuits de multiplication analogique tel que des portes analogiques ET $46_R$, $46_V$, $46_B$. Les circuits composants $41_R$, $41_V$, $41_B$, $42_R$, $42_V$, $42_B$ et 43 entre les bornes $40_R$, $40_V$, $40_B$, reliés respectivement aux sorties du séparateur viéo 3b, et la borne de sortie 44 du circuit 4, sont identiques aux circuits décrits en référence à la fig. 1.

L'entrée du détecteur 45 est reliée à la borne 44 et reçoit le signal de commande de gain α. La sortie du détecteur 45 est reliée à des premières entrées des circuits analogiques ET $46_R$, $46_V$, $46_B$. Ce détecteur 45 est composé de bascules convenables ou d'un comparateur de tension. Il détecte la transition d'un niveau bas à un niveau intermédiaire du signal α et inversement afin de transmettre un signal $\alpha_{D+T}$ dont le premier niveau dit bas délimite le domaine D' de l'image d'avant-scène p, lorsque le signal α est au premier niveau dit bas, et dont le second niveau dit haut délimite l'ensemble des domaines D + T, lorsque le signal α est au second niveau dit haut ou à un niveau intermédiaire. Les secondes entrées des circuits analogiques ET $46_R$, $46_V$ et $46_B$ sont reliées respectivement aux sorties des circuits analogiques ET $42_R$, $42_V$, $42_B$ qui transmettent les premiers signaux de commande de gain primaires $\alpha_R$, $\alpha_V$, $\alpha_B$. Chaque second signal de commande de gain primaire $\alpha_R'$, $\alpha_V'$, $\alpha_B'$ est transmis respectivement par la sortie $44_R$, $44_V$, $44_B$ d'une porte ET analogique $46_R$, $46_V$, $46_B$ vers l'entrée du circuit inverseur associé $52_{bR}$, $52_{bV}$, $52_{bB}$ et vers l'entrée $51_{aR}$, $51_{aV}$, $51_{aB}$ de l'amplificateur à gain variable associé $5_{aR}$, $5_{aV}$, $5_{aB}$. Chaque second signal de commande primaire est analogue au signal α à la différence près que les pentes montantes et descendantes à niveaux intermédiaires ne sont plus une contribution globale des composantes primaires de l'image b, mais une contribution individuelle de la composante primaire associée $b_R$, $b_V$, $b_B$. Par suite, l'image résultante r' transmise par la sortie 2' d'un mélangeur vidéo classique 6', dont les six entrées sont reliées respectivement aux sorties des six amplificateurs à gain variable $5_{bR}$ à $5_{aB}$, reproduit plus fidèlement le domaine de transition T. En effet, selon la première variante, montrée à la fig. 1, les niveaux intermédiaires du signal α contrôlent une variation de gain commune aux composantes primaires dans les amplificateurs 5a et 5b, c'est-à-dire relativement à la luminance des signaux vidéo a et b, tandis que selon la seconde variante les variations de gain relatives à chaque composante primaire du domaine de transition T sont contrôlées indépendamment.

Bien que l'invention ait été décrite selon deux exemples préférés de réalisation, d'autres variantes sensiblement similaires par des modifications de structure, notamment du circuit de commande de gain, peuvent être facilement imaginables par l'homme de l'art dans le cadre de l'invention définie par les revendications annexées. La convention précédente, à savoir du premier niveau bas relatif à l'image d'avant-scène p et du second niveau haut relatif à l'image de fond f, peut être inversée. D'autre part, tout autre système de coordonnées colorimétriques se déduisant du système R, V, B par des relations linéaires peut être utilisé. Il est possible en particulier de se référer au système de coordonnées bien connues R–Y, B–Y, Y où Y est le signal de luminance d'un signal vidéo d'images en couleurs.

**Revendications**

1. Procédé d'incrustation d'une image d'avant-scène dans une image d'arrière-scène en télévision en couleurs, selon lequel une première source vidéo fournit l'image d'avant-scène (p) devant un fond (f) ayant, relativement à un système à trois axes de coordonnée colorimétrique primaire (VR, VV, VB), un domaine colorimétrique (D) à l'intérieur du domaine colorimétrique (D') de l'image d'avant-scène (p) et une seconde source vidéo fournit une image d'arrière-scène (a), et selon lequel les composantes primaires ($b_R$, $b_V$, $b_B$) du signal vidéo de l'image composite d'avant-scène et de fond (b = p + f) sont transmises à des moyens (4) pour produire un signal de commande (α) ayant un premier niveau («O») lorsque la première source vidéo délivre l'image d'avant-scène (p) afin de commander la transmission de l'image d'avant-scène et ayant un second niveau («1») lorsque la première source vidéo délivre l'image de fond (f) afin de commander la transmission de l'image d'arrière-scène (a), caractérisé en ce qu'on définit un domaine trichromatique de transition (T) qui entoure le domaine colorimétrique (D) de l'image de fond (f) et qui est entouré par le domaine colorimétrique (D') de l'image d'avant-scène (p) et en ce que le signal de commande (α) est un signal analogique comprenant des niveaux intermédiaires compris entre les premier («0») et second («1») niveaux qui sont chacun en relation quasi-linéaire avec au moins l'un des rapports relatifs chacun à une composante primaire ($VR_T$; $VV_T$; $VB_T5$) d'un point de l'image composite (p + f) appartenant au domaine de transition (T) et de l'une des deux limites primaires ($VR_1'$ ou $VR_2'$, $VR_1$ ou $VR_2$; $VV_1'$ ou $VV_2'$, $VV_1$ ou $VV_2$; $VB_1'$ ou $VB_2'$, $VB_1$ ou $VB_2$) du domaine de transition (T) la plus proche de ce point par rapport au même axe de coordonnée colorimétrique primaire (VR; VV; VB).

2. Procédé selon la revendication 1, caractérisé en ce que les transmissions séparées des signaux vidéos de l'image composite (b) et de l'image d'arrière-scène (a) sont commandées à travers une amplification de gain G sur toutes les composantes primaires desdits signaux vidéos (a, b).

3. Procédé conforme à la revendication 2, caractérisé en ce que les amplitudes des signaux vidéos de l'image d'arrière-scène (a) et de l'image composite (b = p + f) transmises simultanément lorsque le signal de commande à un niveau intermédiaire, sont amplifiées respectivement d'un gain de αG et de (1–α)G, où α est l'amplitude du signal de commande.

4. Procédé conforme à la revendication 2, caractérisé en ce que les amplitudes de chaque paire de composantes primaires ($a_R$, $b_R$; $a_V$, $b_V$; $a_B$, $b_B$) de l'image d'arrière-scène (a) et de l'image composite (b) transmises simultanément sont amplifiées respectivement de gains de $α_R$G et (1–$α_R$) G, $α_V$G et (1–$α_V$)G ou $α_B$ et (1–$α_B$)G, indépendamment (fig. 4) des gains des deux autres paires de composantes primaires, $α_R$, $α_V$ et $α_B$ étant les amplitudes de signaux de commande de gain primaires dont le produit est égal audit signal de commande α, et ayant chacun ledit premier niveau («0»), ledit second niveau («1») ou un niveau intermédiaire lorsque la première source vidéo transmet respectivement au moins la composante primaire respective d'un point de l'image d'avant-scène (p), de l'image de fond (f) ou du domaine de transition (T).

5. Système d'incrustation d'une image d'avant-scène dans une image d'arrière-scène en télévision en couleurs pour la mise en œuvre du procédé conforme à l'une des revendications 1 à 4, comprenant des moyens (41) ayant leurs entrées recevant les composantes primaires séparées ($b_R$; $b_V$; $b_B$) de l'image composite d'avant-scène et de fond (b = p + f) pour produire des signaux de commande de gain primaires ($α_R$; $α_V$; $α_B$) ayant ledit second niveau («1») lorsque l'amplitude de la composante primaire respective ($b_R$; $b_V$; $b_B$) du signal vidéo de l'image composite (b) est comprise entre deux premières tensions respectives de référence ($VR_1$, $VR_2$; $VV_1$, $VV_2$; $VB_1$, $VB_2$) délimitant le domaine trichromatique (D) de l'image de fond (f), et ayant ledit premier niveau («0») lorsque l'amplitude de la composante primaire respective ($b_R$; $b_V$; $b_B$) du signal vidéo de l'image composite (b) n'est pas comprise au moins entre lesdites deux premières tensions respectives de référence ($VR_1$, $VR_2$; $VV_1$, $VV_2$; $VB_1$, $VB_2$), des moyens (43) pour multiplier lesdits signaux de commande de gain primaires ($α_R$; $α_V$; $α_B$) en ledit signal de commande (α), des moyens (5) recevant les signaux vidéos de l'image composite (b) et de l'image d'arrière-scène (a) pour sélectionner sous la commande du signal de commande (α) la transmission des signaux vidéos de l'image d'avant-scène et de l'image d'arrière-scène et des moyens (6) pour mélanger les signaux vidéos sélectionnés en un signal vidéo résultant (r = a + p) transmettant l'image d'avant-scène incrustée (p) dans l'image d'arrière-scène (a), caractérisé en ce que les moyens (41, 42) de production d'un signal de commande de gain primaire ($α_R$; $α_V$; $α_B$) détectent les amplitudes de la composante primaire respective ($b_R$; $b_V$; $b_B$) du signal vidéo de l'image composite (b = p + f) comprises dans deux intervalles respectifs de tensions de référence [($VR_1$, $VR_1'$), ($VR_2'$, $VR_2$); ($VV_1$, $VV_1'$), ($VV_2'$, $VV_2$); ($VB_1$, $VB_1'$), ($VB_2'$, $VB_2$)] qui délimitent suivant l'axe de la coordonnée colorimétrique primaire respective (VR; VV; VB) le domaine trichromatique de transition (T) et qui ont chacun pour limites l'une desdites premières tensions respectives de référence ($VR_1$, $VR_2$; $VV_1$, $VV_2$; $VB_1$, $VB_2$) et l'une de secondes tensions respectives de référence ($VR_1'$, $VR_2'$; $VV_1'$, $VV_2'$; $VB_1'$, $VB_2'$) délimitant le domaine colorimétrique de l'image d'avant-scène (p), afin de transmettre un niveau intermédiaire ($VR_T$; $VV_T$; $VB_T$) en relation quasi-linéaire avec le rapport de l'amplitude de ladite composante primaire ($b_R$; $b_R$; $b_B$) et de l'une des limites de l'intervalle [($VR_1$, $VR_1'$), ($VR_2'$, $VR_2$); ($VV_1$, $VV_1'$), ($VV_2'$, $VV_2$); ($VB_1$, $VB_1'$), ($VB_2'$, $VB_2$)] comprenant cette amplitude et en ce que lesdits moyens (5) de sélection des signaux vidéos de l'image d'avant-scène (p) et de l'image d'arrière-scène (a) comprennent des moyens d'amplification (5a, 5b) à gain variable sous la commande dudit signal de commande α pour amplifier respectivement les signaux vidéos de l'image composite (b) et de l'image d'arrière-scène (a) avec un gain sensiblement proportionnel à (1–α) et α.

6. Système conforme à la revendication 5, caractérisé en ce que lesdits moyens (41, 42) de production d'un signal de commande de gain primaire ($α_R$, $α_V$, $α_B$), comprennent deux amplificateurs à gain variable (411, 412) qui ont chacun une entrée à l'une desdites première ($VR_1$, $VR_2$; $VV_1$, $VV_2$; $VB_1$, $VB_2$) et seconde ($VR_1'$, $VR_2'$; $VV_1'$, $VV_2'$; $VB_1'$, $VB_2'$) tensions de référence de l'un desdits deux intervalles respectifs de tensions de référence [($VR_1$, $VR_1'$), ($VR_2'$, $VR_2$); ($VV_1$, $VV_1'$), ($VV_2'$, $VV_2$); ($VB_1$, $VB_1'$), ($VB_2'$, $VB_2$)] délimitant le domaine trichromatique de transition (T) et une autre entrée ($40_R$) recevant ladite composante primaire de l'image composite ($b_R$; $b_V$; $b_B$), et dont le gain ($g_1$, $g_2$) de chacun varie quasi-linéairement avec l'amplitude de ladite composante primaire ($b_R$; $b_V$; $b_B$) lorsque celle-ci est comprise dans l'intervalle respectif de tensions de référence [($VR_1$,

VR$_1$'), (VR$_2$', VR$_2$); (VV$_1$, VV$_1$'), (VV$_2$', VV$_2$); (VB$_1$, VB$_1$'), (VB$_2$', VB$_2$)], et des moyens analogiques (42$_R$; 42$_V$; 42$_B$) pour multiplier les signaux sortants des deux amplificateurs (411, 412) en ledit signal de commande de gain primaire ($\alpha_R$; $\alpha_V$; $\alpha_B$).

7. Système conforme à la revendication 6, caractérisé en ce que les moyens d'amplification à gain variable (fig. 1) comprennent un amplificateur à gain variable (5a) qui reçoit le signal vidéo de l'image d'arrière-scène (a) et qui est commandé en gain directement par le signal de commande $\alpha$ et un autre amplificateur à gain variable (5b) qui reçoit le signal vidéo de l'image composite (b) et qui est commandé en gain par le signal (1–$\alpha$) transmis par un inverseur analogique (52b) recevant le signal de commande $\alpha$.

8. Système conforme à la revendication 6, caractérisé en ce qu'il comprend (fig. 4) des moyens de détection (45) recevant ledit signal de commande $\alpha$ pour produire un signal logique ($\alpha_{D+T}$) ayant ledit premier niveau («0») lorsque le signal de commande ($\alpha$) est audit premier niveau, et ayant ledit second niveau («1») lorsque le signal de commande $\alpha$ est audit second niveau («1») ou à un niveau intermédiaire, et des moyens analogiques (46) pour multiplier respectivement chacun desdits signaux de commande de gain primaires ($\alpha_R$; $\alpha_V$; $\alpha_B$) par ledit signal logique ($\alpha_{D+T}$) en un second signal de commande de gain primaire ($\alpha'_R$; $\alpha'_V$; $\alpha'_B$) et en ce que lesdits moyens d'amplification à gain variable comprennent des premiers amplificateurs à gain variable (5$_{bR}$; 5$_{bV}$; 5$_{bB}$) recevant respectivement les composantes primaires séparées de l'image composite d'avant-scène et de fond (b = p + f) et des seconds amplificateurs à gain variable (5$_{aR}$; 5$_{aV}$; 5$_{aB}$) recevant respectivement les composantes primaires de l'image d'arrière-scène (a), les premier et second amplificateurs (5$_{bR}$, 5$_{aR}$; 5$_{bV}$, 5$_{aV}$; 5$_{bB}$, 5$_{aB}$) relatifs à une même coordonnée colorimétrique primaire (VR; VV; VB) étant commandés en gain par le second signal de commande primaire respectif ($\alpha'_R$; $\alpha'_V$; $\alpha'_B$) respectivement à travers un inverseur analogique (52$_{bR}$; 52$_{bV}$; 52$_{bB}$) et directement.

**Claims**

1. Method for overlaying a foreground scene picture in a background scene picture in colour television, for which a first video source supplies the foreground scene picture (p) before a backing (f) having a colorimetric region (D) inside the colorimetric region (D') of the foreground scene picture (p) with regard to a system having three primary colorimetric coordinate axis (VR, VV, VB), and a second video source supplies a background scene picture (a), and for which the primary component (b$_R$, b$_V$, b$_B$) of the video signal of the foreground scene and backing composite picture (b = p + f) are transmitted to means (4) for producing a control signal ($\alpha$) having a first level ("0") when the first video source delivers the foreground scene picture (p), to control the transmission of the foreground scene picture and having a second level ("1") when the first video source delivers the backing (f), to control the transmission of the background scene picture (a), characterized in that is defined a trichromatic transition region (T) that envelops the colorimetric region (D) of the backing picture (f) and that is enveloped by the colorimetric region (D') of the foreground scene picture (p) and in that the control signal ($\alpha$) is an analog signal comprising intermediate levels lying between the first ("0") and second ("1") levels and being almost linear relationship with at least one of the ratios each relative to a primary component (VR$_T$; VV$_T$; VB$_T$) of a point of the composite picture (p + f) belonging to the transition region (T) and relative to one of two primary limits (VR'$_1$ or VR'$_2$, VR$_1$ or VR$_2$; VV'$_1$ or VV'$_2$, VV$_1$ or VV$_2$; VB'$_1$ or VB'$_2$; VB$_1$ or VB$_2$) of the transition region (T) that is the nearest limit from this point with regard to the same primary colorimetric coordinate axis (VR; VV; VB).

2. Method according to claim 1, characterized in that the separate transmissions of the video signals of the composite picture (b) and the background scene picture (a) are controlled using amplification of gain G on all the primary components of said video signals (a, b).

3. Method according to claim 2, characterized in that the amplitudes of the background scene picture (a) and composite picture (b = p + f) video signals simultaneously transmitted when the control signal has an intermediate level, are amplified by a gain of $\alpha$G and (1 – $\alpha$)G respectively, where $\alpha$ is the amplitude of the control signal.

4. Method according to claim 2, characterized in that the amplitudes of each pair of primary components (a$_R$, b$_R$; a$_V$, b$_V$; a$_B$, b$_B$) of the background scene picture (a) and the composite picture (b) simultaneously transmitted are amplified by gains of $\alpha_R$G and (1–$\alpha_R$)G, $\alpha_V$G and (1–$\alpha_V$)G or $\alpha_B$ and (1–$\alpha_B$)G respectively, independently (fig. 4) of the gains of the two other primary component pairs, $\alpha_R$, $\alpha_V$ and $\alpha_B$ being the amplitudes of primary gain control signals whose product is equal to said control signal $\alpha$, and each having said first level ("0"), said second level ("1") or an intermediate level when the first video source respectively transmits at least the respective primary component of a point of the foreground scene picture (p), the backing picture (f) or the transition region (1).

5. System for overlaying a foreground scene picture in a background scene picture in colour television and for carrying out the method according to any one of claims 1 to 4, comprising means (41) having their inputs receiving the separate primary components (b$_R$; b$_V$; b$_B$) of the foreground and backing composite picture (b = p + f) for producing primary gain control signals ($\alpha_R$; $\alpha_V$; $\alpha_B$) having said second level ("1") when the amplitude of the respective primary component (b$_R$; b$_V$; b$_B$) of the composite picture (b) video signal lies between two respective first reference voltages (VR$_1$, VR$_2$; VV$_1$, VV$_2$; VB$_1$, VB$_2$) boundering the trichromatic region (D) of the backing picture (f), and having said first level ("0") when the amplitude of the respective primary component (b$_R$;

$b_V$; $b_B$) of the composite picture (b) video signal does not lie at least between said two respective first reference voltages ($VR_1$, $VR_2$; $VV_1$, $VV_2$; $VB_1$, $VB_2$), means (43) for multiplying said primary gain control signals ($\alpha_R$; $\alpha_V$; $\alpha_B$) into a said control signal ($\alpha$), means (5) receiving the video signals of the composite picture (b) and the background scene picture (a) for selecting the transmission the video signals of the foreground scene picture and the background scene under the control of the control signal ($\alpha$), and means (6) for mixing the selected video signals into a resulting video signal (r = a + p) supplying the foreground scene picture (p) overlayed in the background scene picture (a), characterized in that the means (41, 42) for producing a primary gain control signal ($\alpha_R$; $\alpha_V$; $\alpha_B$) detect the amplitudes of the respective primary component ($b_R$; $b_V$; $b_B$) of the composite picture (b = p + f) video signal lying within two respective reference voltage ranges [($VR_1$, $VR'_1$), ($VR'_2$, $VR_2$); ($VV_1$, $VV'_1$), ($VV'_2$, $VV_2$); ($VB_1$, $VB'_1$), ($VB'_2$, $VB_2$)] that bound the trichromatic transition region (T) along the respective primary colorimetric coordinate axis (VR; VV; VB) and that each have as limits one of said respective first reference voltages ($VR_1$, $VR_2$; $VV_1$, $VV_2$, $VB_1$, $VB_2$) and one of said respective second reference voltages ($VR'_1$, $VR'_2$; $VV'_1$, $VV'_2$; $VB'_1$, $VB'_2$) boundaring the colorimetric region of the foreground scene picture (p), so as to transmit an intermediate level ($VR_T$; $VV_T$; $VB_T$) almost linear relationship with the ratio of the amplitude of said primary component ($b_R$; $b_V$; $b_B$) and one of the limits of the range [($VR_1$, $VR'_1$), ($VR'_2$, $VR_2$); ($VV_1$, $VV'_1$), ($VV'_2$, $VV_2$); ($VB_1$, $VB'_1$), ($VB'_2$, $VB_2$)] including this amplitude and in that said means (5) for selecting the video signals of the foreground scene picture (p) and the background scene picture (a) comprise variable gain amplifying means (5a, 5b) controlled by the control signal ($\alpha$) for amplifying the video signals of the composite picture (b) and the background scene picture (a) with a gain substantially proportional to ($1-\alpha$) and $\alpha$ respectively.

6. System according to claim 5, characterized in that said means (41, 42) for producing a primary gain control signal ($\alpha_R$; $\alpha_V$; $\alpha_B$) comprise two variable gain amplifiers (411, 412) which each have an input at one of said first ($VR_1$, $VR_2$; $VV_1$, $VV_2$; $VB_1$, $VB_2$) and second ($VR'_1$, $VR'_2$; $VV'_1$, $VV'_2$; $VB'_1$, $VB'_2$) reference voltages of one of said two respective reference voltage ranges [($VR_1$, $VR'_1$), ($VR'_2$, $VR_2$); ($VV_1$, $VV'_1$), ($VV'_2$, $VV_2$); ($VB_1$, $VB'_1$), ($VB'_2$, $VB_2$)] boundering the trichromatic transition region (T) and another input ($40_R$; $40_V$; $40_B$) receiving said primary component ($b_R$; $b_V$; $b_B$), and the gain ($g_1$, $g_2$) of each of which varies almost linearly with the amplitude of said primary component ($b_R$; $b_V$; $b_B$) when this amplitude lies within the respective reference voltage range [($VR_1$, $VR'_1$), ($VR'_2$, $VR_2$); ($VV_1$, $VV'_1$), ($VV'_2$, $VV_2$); ($VB_1$, $VB'_1$), ($VB'_2$, $VB_2$)], and analog means ($42_R$; $42_V$; $42_B$) for multiplying the outputting signals from the two amplifiers (411, 412) into said primary gain control signal ($\alpha_R$; $\alpha_V$; $\alpha_B$).

7. System according to claim 6, characterized in that the variable gain amplifying means (fig. 1) comprise a variable gain amplifier (5a) that receives the background scene picture (a) video signal and that is controlled as regards gain directly by the control signal $\alpha$, and another variable gain amplifier (5b) that receives the composite picture (b) video signal and that is controlled as regards gain by the signal ($1-\alpha$) delivered from an analog inverter (52b) receiving the control signal $\alpha$.

8. System according to claim 6, characterized in that it comprises (fig. 4) detecting means (45) receiving said control signal ($\alpha$) for producing a logic signal ($\alpha_{D+T}$) having said first level ("0") when the control signal ($\alpha$) is at said first level, and having said second level ("1") when the control signal ($\alpha$) is at said second level ("1") or at an intermediate level, and analog means (46) for multiplying each of said primary gain control signals ($\alpha_R$; $\alpha_V$; $\alpha_B$) by said logic signal ($\alpha_{D+T}$) into a second primary gain control signal ($\alpha'_R$; $\alpha'_V$; $\alpha'_B$) respectively and in that said variable gain amplifying means comprise first variable gain amplifiers ($5_{bR}$; $5_{bV}$; $5_{bB}$) receiving the separate primary components of the foreground scene and backing composite picture (b = p + f) respectively and second variable gain amplifiers ($5_{aR}$; $5_{aV}$; $5_{aB}$) receiving the primary components of the foreground picture (a) respectively, the first and second amplifiers ($5_{bR}$, $5_{aR}$; $5_{bV}$, $5_{aV}$; $5_{bB}$, $5_{aB}$) associated with one and the same primary colorimetric coordinate (VR; VV; VB) being controlled as regards gain by the respective primary control signal ($\alpha'_R$; $\alpha'_V$; $\alpha'_B$) through an analog inverter ($52_{bR}$; $52_{bV}$; $52_{bB}$) and directly respectively.

**Patentansprüche**

1. Verfahren zum Einblenden eines Vordergrundbildes in ein Hintergrundbild beim Farbfernsehen, wobei eine erste Videoquelle das Vordergrundbild (p) vor einem Fond (f) liefert, der, bezogen auf ein System mit drei primären kolorimetrischen Koordinatenachsen (VR, VV, VB), ein kolorimetrisches Gebiet (D) im Inneren des kolorimetrischen Gebietes (D') des Vordergrundbildes (p) aufweist, und eine zweite Videoquelle ein Hintergrundbild (a) liefert, und wobei die Primärkomponenten ($b_R$, $b_V$, $b_B$) des Videosignals für das aus Vordergrund und Fond zusammengesetzte Bild (b = p + f) zu einer Einrichtung (4) zum Erzeugen eines Steuersignals ($\alpha$) übertragen werden, das einen ersten Pegel («0»), wenn die erste Videoquelle das Vordergrundbild (p) liefert, um die Übertragung des Vordergrundbildes zu steuern, und einen zweiten Pegel («1»), wenn die erste Videoquelle das Fondbild (f) liefert, um die Übertragung des Hintergrundbildes (a) zu steuern, aufweist, dadurch gekennzeichnet, dass ein trichromatisches Übergangsgebiet (T) definiert wird, das das kolorimetrische Gebiet (D) des Fondbildes (f) umgibt und das von dem kolorimetrischen Gebiet (D') des Vordergrundbildes (p) umgeben ist, und dass das Steuersignal ($\alpha$) ein Analogsignal mit zwischen dem ersten («0») und dem zweiten («1») Pegel enthaltenen Zwischenpegeln ist, die jeder in quasi linearer Relation stehen mit mindestens einem der Verhältnisse, die jeweils auf eine Primärkomponente ($VR_T$; $VV_T$; $VB_T$) eines Punktes des Übergangsgebiet (T) gehörenden zusammengesetzten Bildes (p + F) und einer der beiden Primärgrenzen ($VR'_1$ oder $VR'_2$, $VR_1$ oder $VR_2$; $VV'_1$ oder $VV'_2$, $VV_1$ oder $VV_2$; $VB'_1$ oder $VB'_2$, $VB_1$ oder $VB_2$) des diesem Punkt bezüglich derselben kolorimetrischen Primärkoordinatenachse (VR; VV; VB) am nächsten liegenden Übergangsgebietes (T) bezogen sind.

2. Verfahren nach Anspruch 1, dadurch gekennzeichnet, dass die getrennten Übertragungen der Videosignale des zusammengesetzten Bildes (b) und des Hintergrundbildes (a) über eine Verstärkung mit dem Verstärkungsgrad G auf allen Primärkomponenten der Videosignale (a, b) gesteuert werden.

3. Verfahren nach Anspruch 2, dadurch gekennzeichnet, dass die Amplituden der Videosignale des Hintergrundbildes (a) und des zusammengesetzten Bildes (b = p + f), die gleichzeitig übertragen werden, wenn das Steuersignal einen Zwischenpegel annimmt, mit einem Verstärkungsgrad $\alpha$G bzw. (1−$\alpha$)G verstärkt werden, wobei $\alpha$ die Amplitude des Steuersignals ist.

4. Verfahren nach Anspruch 2, dadurch gekennzeichnet, dass die Amplituden jedes Primärkomponentenpaares ($a_R$, $b_R$; $a_V$, $b_V$; $a_B$, $b_B$) des gleichzeitig übertragenen Hintergrundbildes (a) und zusammengesetzten Bildes (b) mit jeweils dem Verstärkungsgrad $\alpha_R$G und (1−$\alpha_R$)G, $\alpha_V$G und (1−$\alpha_V$)G oder $\alpha_B$ und (1−$\alpha_B$)G verstärkt werden, unabhängig (Fig. 4) von den Verstärkungsgraden der beiden anderen Primärkomponentenpaare, wobei $\alpha_R$, $\alpha_V$ und $\alpha_B$ die Amplituden der primären Steuersignale für den Verstärkungsgrad sind, deren Produkt gleich dem Steuersignal $\alpha$ ist, und die jeweils den ersten Pegel («0»), den zweiten Pegel («1») oder einen Zwischenpegel aufweisen, wenn die erste Videoquelle jeweils mindestens die Primärkomponente eines Punktes des Vordergrundbildes (p), des Fondbildes (f) oder des Übergangsgebietes (T) überträgt.

5. System zum Einblenden eines Vordergrundbildes in ein Hintergrundbild beim Farbfernsehen zur Ausführung des Verfahrens nach einem der Ansprüche 1 bis 4, mit einer Einrichtung (41), deren Eingänge die getrennten Primärkomponenten ($b_R$; $b_V$; $b_B$) des zusammengesetzten Vordergrund- und Fondbildes (b = p + f) empfangen, um primäre Steuersignale für den Verstärkungsgrad ($\alpha_R$; $\alpha_V$; $\alpha_B$) zu erzeugen, die den zweiten Pegel («1») aufweisen, wenn die Amplitude der jeweiligen Primärkomponente ($b_R$; $b_V$; $b_B$) des Videosignals des zusammengesetzten Bildes (b) zwischen zwei jeweiligen ersten Bezugsspannungen ($VR_1$, $VR_2$; $VV_1$, $VV_2$, $VB_1$, $VB_2$) liegt, welche das trichromatische Gebiet (D) des Fondbildes (f) begrenzen, und die den ersten Pegel («0») aufweisen, wenn die Amplitude der jeweiligen Primärkomponente ($b_R$; $b_V$; $b_B$) des Videosignals für das zusammengesetzte Bild (b) nicht mindestens zwischen den beiden ersten jeweiligen Bezugsspannungen ($VR_1$, $VR_2$;

$VV_1$, $VV_2$; $VB_1$, $VB_2$) enthalten ist, mit einer Multiplikationseinrichtung (43) zum Multiplizieren der primären Steuersignale für den Verstärkungsgrad ($\alpha_R$; $\alpha_V$; $\alpha_B$) in dem Steuersignal ($\alpha$), mit einer Auswahleinrichtung (5), welche die Videosignale des zusammengesetzten Bildes (b) und des Hintergrundbildes (a) empfängt, um unter Steuerung durch das Steuersignal ($\alpha$) die Übertragung der Videosignale des Vordergrundbildes und des Hintergrundbildes auszuwählen, und mit einer Mischeinrichtung (6) für das Mischen der ausgewählten Videosignale in ein resultierendes Videosignal (r = a + p), welches das in ein Hintergrundbild (a) eingeblendete Vordergrundbild (p) überträgt, dadurch gekennzeichnet, dass die Einrichtungen (41, 42) für die Erzeugung eines primären Steuersignals für den Verstärkungsgrad ($\alpha_R$; $\alpha_V$; $\alpha_B$) die Amplituden der jeweiligen Primärkomponente ($b_R$; $b_V$; $b_B$) des Videosignals des zusammengesetzten Bildes (b = p + f) abtasten, die in jeweils zwei Bezugsspannungsintervallen [($VR_1$, $VR'_1$), ($VR'_2$, $VR_2$); ($VV_1$, $VV'_1$), ($VV'_2$, $VV_2$); ($VB_1$, $VB'_1$), ($VB'_2$, $VB_2$)] enthalten sind, welche gemäss der jeweiligen kolorimetrischen Primärkoordinatenachse (VR; VV; VB) das trichromatische Übergangsgebiet (T) begrenzen und die jeweils als Grenzen eine der ersten Bezugsspannungen ($VR_1$, $VR_2$; $VV_1$, $VV_2$; $VB_1$, $VB_2$) und eine der zweiten Bezugsspannungen ($VR'_1$, $VR'_2$; $VV'_1$ $VV'_2$; $VB'_1$, $VB'_2$) für die Begrenzung des kolorimetrischen Gebiets des Vordergrundbildes (p) haben, um einen Zwischenpegel ($VR_T$; $VV_T$; $VB_T$) in quasi linearer Relation mit dem Verhältnis der Amplitude der Primärkomponente ($b_R$; $b_V$; $b_B$) und einer der diese Amplitude umfassenden Intervallgrenzen [($VR_1$, $VR'_1$), ($VR'_2$, $VR_2$); ($VV_1$, $VV'_1$); ($VV'_2$, $VV_2$); ($VB_1$, $VB'_1$), ($VB'_2$, $VB_2$)] zu übertragen, und dass die Auswahleinrichtung (5) für Videosignale des Vordergrundbildes (p) und des Hintergrundbildes (a) mit unter Steuerung durch das Steuersignal $\alpha$ variabler Verstärkung arbeitende Verstärkereinrichtungen (5a, 5b) umfasst, um jeweils die Videosignale des zusammengesetzten Bildes (b) und des Hintergrundbildes (a) mit einem im wesentlichen zu (1−$\alpha$) und $\alpha$ proportionalen Verstärkungsgrad zu verstärken.

6. System nach Anspruch 5, dadurch gekennzeichnet, dass die Einrichtungen (41, 42) für die Erzeugung eines primären Steuersignals für den Verstärkungsgrad ($\alpha_R$; $\alpha_V$; $\alpha_B$) zwei Verstärker mit variabler Verstärkung (411, 412) umfassen, die jeder einen Eingang auf einer der ersten ($VR_1$, $VR_2$; $VV_1$, $VV_2$; $VB_1$, $VB_2$) und zweiten ($VR'_1$, $VR'_2$; $VV'_1$, $VV'_2$; $VB'_1$, $VB'_2$) Bezugsspannungen eines der beiden Intervalle bezüglich der Bezugsspannungen [($VR_1$, $VR'_1$), ($VR'_2$, $VR_2$); ($VV_1$, $VV'_1$), ($VV'_2$, $VV_2$); ($VB_1$, $VB'_1$), ($VB'_2$, $VB_2$)], welche das trichromatische Übergangsgebiet (T) begrenzen, haben, und die mit einem anderen Eingang ($40_R$; $40_V$; $40_B$) die Primärkomponente des zusammengesetzten Bildes ($b_R$; $b_V$; $b_B$) empfangen, und deren jeweiliger Verstärkungsgrad ($g_1$, $g_2$) sich quasi linear mit der Amplitude der Primärkomponente ($b_R$; $b_V$; $b_B$) ändert, wenn diese in dem entsprechenden Bezugsspannungsintervall [($VR_1$, $VR'_1$),

(VR'$_2$, VR$_2$); (VV$_1$, VV'$_1$), (VV'$_2$, VV$_2$); (VB$_1$, VB'$_1$), (VB'$_2$, VB$_2$)] liegt, sowie Analogeinrichtungen (42$_R$; 42$_V$, 42$_B$) umfassen, um die Ausgangssignale der beiden Verstärker (411, 412) in dem primären Steuersignal für den Verstärkungsgrad ($\alpha_R$; $\alpha_V$; $\alpha_B$) zu multiplizieren.

7. System nach Anspruch 6, dadurch gekennzeichnet, dass die Verstärkereinrichtung mit variablem Verstärkungsgrad (Fig. 1) einen Verstärker mit veränderlichem Verstärkungsgrad (5a), der das Videosignal des Hintergrundbildes (a) empfängt und dessen Verstärkungsgrad unmittelbar durch das Steuersignal $\alpha$ gesteuert ist, und einen weiteren Verstärker mit veränderlichem Verstärkungsgrad (5b) umfasst, der das Videosignal des zusammengesetzten Bildes (b) empfängt und dessen Verstärkungsgrad durch das Signal (1–$\alpha$) gesteuert ist, welches über einen das Steuersignal $\alpha$ empfangenden analogen Inverter (52b) übertragen ist.

8. System nach Anspruch 6, dadurch gekennzeichnet, dass es (Fig. 4) eine Detektoreinrichtung (45) umfasst, die das Steuersignal $\alpha$ empfängt, um ein logisches Signal ($\alpha_{D+T}$) zu erzeugen, welches den ersten Pegel («0») aufweist, wenn das Steuersignal ($\alpha$) den ersten Pegel hat, und welches den zweiten Pegel («1») aufweist, wenn das Steuersignal ($\alpha$) den zweiten Pegel («1») oder einen Zwischenpegel hat, und eine Analogeinrichtung (46) umfasst, um jeweils jedes der primären Steuersignale für den Verstärkungsgrad ($\alpha_R$; $\alpha_V$; $\alpha_B$) durch das logische Signal ($\alpha_{D+T}$) in ein zweites primäres Steuersignal für den Verstärkungsgrad ($\alpha'_R$; $\alpha'_V$; $\alpha'_B$) zu multiplizieren, und dass die Verstärkereinrichtungen mit variablem Verstärkungsgrad erste Verstärker mit variabler Verstärkung (5$_{bR}$; 5$_{bV}$; 5$_{bB}$), welche jeweils die getrennten Primärkomponenten des zusammengesetzten Vordergrund- und Fondbildes (b = p + f) empfangen, sowie zweite Verstärker mit veränderlichem Verstärkungsgrad (5$_{aR}$; 5$_{aV}$; 5$_{aB}$) umfassen, welche jeweils die Primärkomponenten des Hintergrundbildes (a) empfangen, wobei die ersten und zweiten Verstärker (5$_{bR}$, 5$_{aR}$; 5$_{bV}$, 5$_{aV}$; 5$_{bB}$, 5$_{aB}$) mit Bezug auf eine gleiche kolorimetrische Primärkoordinate (VR; VV; VB) in ihrem Verstärkungsgrad durch das entsprechende zweite primäre Steuersignal ($\alpha'_R$; $\alpha'_V$; $\alpha'_B$) jeweils über einem analogen Inverter (52$_{bR}$; 52$_{bV}$; 52$_{bB}$) und unmittelbar gesteuert sind.

FIG.1

0 014 665

13

FIG.2

# FIG.3A

Volts

$VR'_2$
$VR_2$
$VR_1$
$VR_T$
$VR'_1$

$b_R$

temps

| image | P | $f+p$ | $f$ | $f+p$ | p | $f+p$ | $f$ | $f+p$ P |
|---|---|---|---|---|---|---|---|---|
| domaine | D' | T | D | T | D' | D | T | T D |

## FIG.3B

Signal de sortie

411

1
0

$\alpha_{R1}$

## FIG.3C

412

1
0

$\alpha_{R2}$

## FIG.3D

Second niveau

1
0

premier niveau

$\alpha_R$

## FIG.3E

1
0

$(1-\alpha_R)$

17

FIG.4